# EUROPEAN PATENT APPLICATION

(11) **EP 2 696 130 A1**
(43) Date of publication of application: **12.02.2014**
(21) Application number: 12767247.5
(22) Date of filing: 13.02.2012
(51) Int. Cl.: F21S 2/00, G02B 6/00, F21Y 101/02, F21Y 103/00

(54) **METHOD AND DEVICE FOR CREATING LIGHT GUIDE PLATE**

(30) Priority: 08.04.2011 JP 2011085859
(71) Applicant: MUTOH INDUSTRIES LTD., Tokyo 154-0001 (JP)
(72) Inventor: ABE Yoichi, Tokyo 154-0001 (JP); NAKAJIMA Tomoo, Tokyo 154-0001 (JP)
(74) Representative: Von Rohr
(86) International application number: PCT/JP2012/053226
(87) International publication number: WO 2012/137537

(57) **Abstract**

A light guide plate having a different color temperature can be created easily. The inkjet printer includes a white ink supply section including ink tanks for storing a plurality of types of white inks determining the color temperature of the light guide plate, respectively. The respective print heads are connected to the respective ink tanks so that the respective print heads can eject white inks of types different from one another. A data table is provided that sets various printing conditions determining the color temperature of the light guide plate. Based on the data table, the printer drives, based on selected printing conditions, and forms the reflection printing on the light guide plate to create a light guide plate having a color temperature corresponding to printing conditions selected based on one type of white ink or a combination of a plurality of types of white inks.

## Description

### Technical Field

The present invention relates to a method and a device for creating a light guide plate for backlight for example that diffuses light entered through a side face to emit uniform light over the surface.

### Background Art

A method is known to manufacture a light guide plate by using a surface as an illumination light irradiated area to use an inkjet printer to form many printed dots on a back face only by white ink to thereby form a reflection printing face (see Patent Publication 1).

### Prior Art Publication

### Patent Publication

Patent Publication 1: Japanese Laid-Open Publication No. H9-68614

### Summary of the Invention

### Problem to be Solved by the Invention

When a light guide plate is prepared by printing only the same white ink by an inkjet printer, light emitted from the surface of the light guide plate has the same color temperature. If a light guide plate having a different color temperature is required, different ink must be used. Such a case cannot be handled by an inkjet printer that performs printing only by one white ink, thus requiring the exchange of ink. Furthermore, the ink exchange requires a very long time when screen printing is used, thus resulting in a disadvantage where a change of a printing pattern for example requires time and effort. The term "color temperature" means a numerical value representing a relative intensity of blue-violet light and red light included in a light source from which a certain color is emitted.

It is an objective of the present invention to solve the above disadvantage. It is another objective of the present invention to provide a method for creating a light guide plate by which a light guide plate having a desired color temperature can be easily created.

### Means for Solving the Problem

In order to achieve the above objectives, the present invention is a method of creating a light guide plate by transferring printing data of a light reflection pattern stored in a computer to an inkjet printer so that the inkjet printer subjects a printing face of the light guide plate to a reflection printing for randomly dispersing the light emitted from a light source to the interior of the light guide plate. The inkjet printer includes a white ink supply section including ink tanks for storing a plurality of types of white inks determining the color temperature of the light guide plate, respectively. The inkjet printer includes a plurality of print heads. The respective print heads are connected to the respective ink tanks so that the respective print heads can eject white inks of types different from one another. The inkjet printer subjects the light guide plate to a reflection printing to create a light guide plate having a color temperature corresponding to one selected type of white ink or a combination of a plurality of selected types of white inks.

Also according to the present invention, in the method for creating a light guide plate, a data table is provided that sets various printing conditions determining the color temperature of the light guide plate based on the selection and combination of a plurality of types of white inks. Based on the data table, the inkjet printer subjects, based on selected printing conditions, the light guide plate to the reflection printing to create a light guide plate having a color temperature corresponding to printing conditions selected based on one type of white ink or a combination of a plurality of types of white inks.

Also according to the present invention, in the method for creating a light guide plate, the respective plurality of types of white inks determining the color temperature of the light guide plate include titanium oxide having a different particle size distribution.

Furthermore, the present invention uses an inkjet printer and a computer for transferring to the printer the printing data of a light reflection pattern. The printing data of the light reflection pattern stored in the computer is transferred to the inkjet printer. The inkjet printer subjects a printing face of the light guide plate to a reflection printing for randomly dispersing the light emitted from a light source to the interior of the light guide plate, thereby creating the light guide plate. The inkjet printer includes a white ink supply section including ink tanks for storing a plurality of types of white inks determining the color temperature of the light guide plate, respectively. The inkjet printer includes a plurality of print heads. The respective print heads are connected to the respective ink tanks so that the respective print heads can eject white inks of types different from one another. The inkjet printer subjects the light guide plate to a reflection printing to create a light guide plate having a color temperature corresponding to one selected type of white ink or a combination of a plurality of selected types of white inks.

Also according to the present invention, the light guide plate creating device has a data table that sets various printing conditions determining the color temperature of the light guide plate based on the selection and combination of a plurality of types of white inks Based on the data table, the inkjet printer subjects, based on selected printing conditions, the light guide plate to the reflection printing to create a light guide plate having a color temperature corresponding to printing conditions selected based on one type of white ink or a combination of a plurality of types of white inks.

Also according to the present invention, the data table is provided in the computer.

Also according to the present invention, the data table is provided in the storage apparatus of the controller of the inkjet printer.

Also according to the present invention, the respective plurality of types of white inks determining the color temperature of the light guide plate include titanium oxide having a different particle size distribution.

Also according to the present invention, the printing conditions of the data table is composed of selection information for selecting one of a plurality of types of white inks and ink combination information consisting of a combination of two or more different types of white inks and data for the allocation of combined inks.

Also according to the present invention, a carriage movable in a main scanning direction of the inkjet printer has thereon a plurality of print heads arranged in parallel so that printing regions are superposed one another in a main scanning direction.

Also according to the present invention, the printing data of the light reflection pattern stored in the computer is transferred to the inkjet printer. The inkjet printer subjects a printing face of the light guide plate to a reflection printing for randomly dispersing the light emitted from a light source to the interior of the light guide plate, thereby creating the light guide plate. The inkjet printer includes a white ink supply section including ink tanks for storing white inks. The print head of the inkjet printer is connected to the ink tanks so that white ink can be ejected from the print head. The white ink includes titanium oxide having a different particle size distribution. The particle size distribution status is adjusted depending on the color temperature of a desired light guide plate Ink for which the distribution status of the titanium oxide particle size is adjusted is used to allow the inkjet printer to subject the light guide plate to the reflection printing to thereby create a light guide plate having a color temperature corresponding to the white ink.

### Effect of the Invention

According to the present invention, a plurality of white inks having color temperatures different from one another are prepared. The reflection dots or reflection gradation of the light guide plate can be created by one type of white ink or a combination of a plurality of types of white inks to thereby easily create light guide plates having many color temperatures.

Furthermore, a light guide plate having a desired color temperature can be created easily.

### Brief Description of Drawings

- Fig. 1: is a block diagram illustrating this device.
- Fig. 2: illustrates a data table.
- Fig. 3: illustrates the present invention.
- Fig. 4: illustrates the present invention.
- Fig. 5: illustrates the present invention.
- Fig. 6: illustrates the present invention.
- Fig. 7: illustrates the present invention.
- Fig. 8: illustrates a light guide plate.
- Fig. 9: illustrates the present invention.
- Fig. 10: illustrates a printer.
- Fig. 11: illustrates the present invention.
- Fig. 12: illustrates the present invention.
- Fig. 13: illustrates the present invention.
- Fig. 14: is a flowchart illustrating the operation of the present invention.

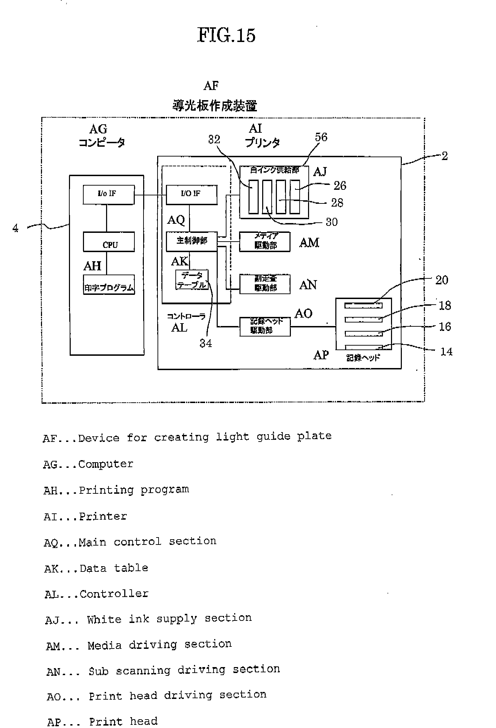

- Fig. 15: is a block diagram illustrating another embodiment of this device.
- Fig. 16: is a flowchart illustrating the operation of another embodiment of the present invention.

### Mode for Carrying Out the Invention

The following section will describe the configuration of the present invention with reference to the attached drawings.

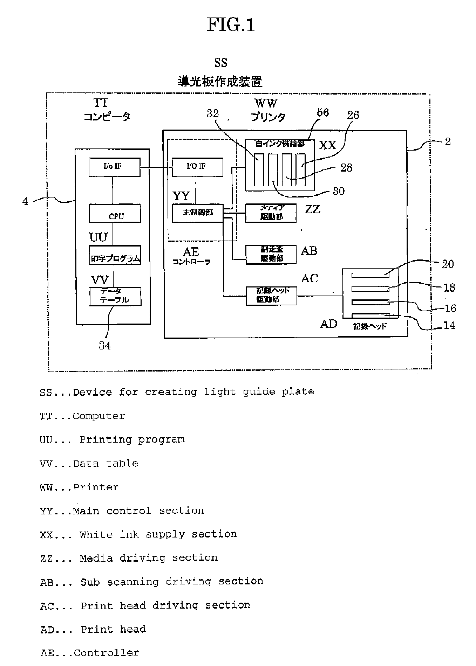

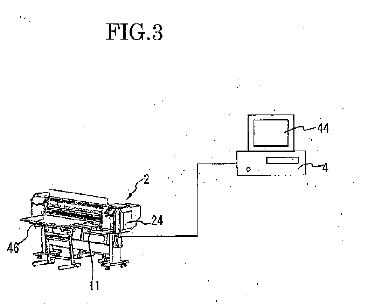

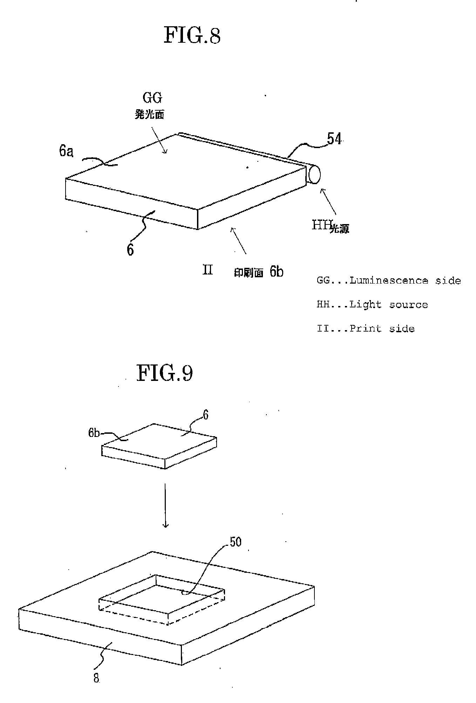

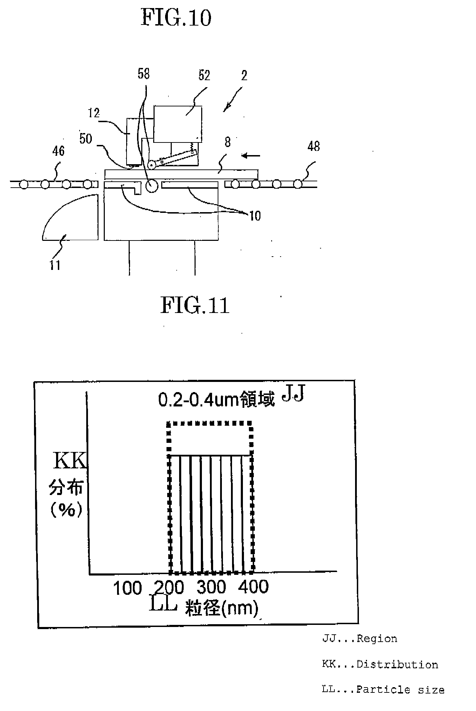

Fig. 1 and Fig. 3 are schematic diagrams illustrating a light guide plate printing apparatus composed of an inkjet printer 2 and a computer 4 such as a personal computer connected to the controller of the printer 2 via an input/output interface. As shown in Fig. 8, a light guide plate 6 is carried by a media driving mechanism 58 as shown in Fig. 10 from a carrying table 48 onto a platen 10 while an upward-facing printing face 6b at the back side of a light-emitting face 6a being retained by an engagement concave section 50 of a board-like carrying auxiliary member 8. To the light guide plate 6 on the platen 10, a printing section 50 including an inkjet print head is moved while ejecting ink through a nozzle in a main scanning direction orthogonal to the carrying direction. The printing data transferred from the computer 4 to the controller of the inkjet printer 2 is printed, by the control of software stored in the controller, onto the printing face 6b of the light guide plate 6. The light guide plate 6 for which the printing is completed is carried onto a carrying table 46 placed on a guide 11.

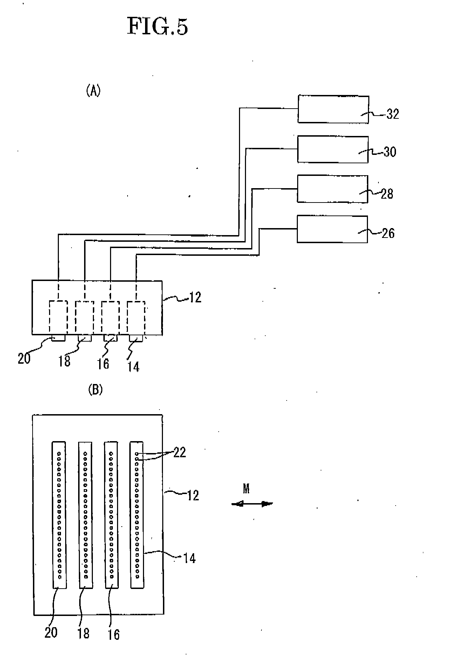

The platen 10 has thereon a lateral rail 52. The lateral rail 52 is connected to a carriage 12 in a freely movable manner. As shown in Fig. 5, this carriage 12 retains a plurality of inkjet print heads 14, 16, 18, and 20. The respective print heads 14, 16, 18, and 20 include many nozzles 22 for ejecting ink. The respective heads 14, 16, 18, and 20 communicate, as shown in Fig. 5(A), with the respective ink tanks of a white ink supply section 56 including ink tanks 26, 28, 30, and 32 respectively provided in a body 24 of the printer 2 via an ink supply means such as a tube.

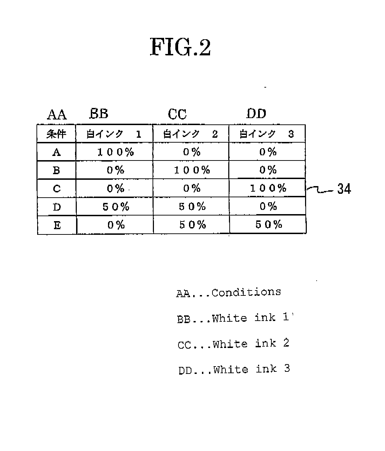

The plurality of print heads 14, 16, 18, and 20 are arranged in parallel, as shown in Fig. 5(B), in the main scanning direction M along the lateral rail 52 so that the printing regions are superposed one another. The storage apparatus of the computer 4 stores therein software for creating the printing data of a light reflection pattern (printing program) and includes a data table 34 shown in Fig. 2. This data table 34 sets in advance combinations of color temperatures and inks for printing each or a combination of plurality types of white inks on a light guide plate so that light guide plates having many color temperatures can be created. By using this data table 34, light guide plates having many color temperatures can be easily created. The computer stores therein printing control software by which the data table 34 can be created or corrected.

The created light guide plate 6 is obtained, as shown in Fig. 8, by printing reflection dots or reflection gradation (minute dots such as those of a fogged glass) on a flat face part of the printing face 6b of a transparent acrylic plate. The thickness part of the light guide plate 6 includes a light source 54 composed of light-emitting material such as a cold-cathode tube or LED so that the entire flat face of the light-emitting face 6a can be seen as if light is emitted therefrom.

The data table 34 shows an example in which three types of white inks 1, 2 and 3 having different color temperatures are prepared. When ink including titanium oxide is used, white inks having different color temperatures are prepared depending on the distribution of the particle size of titanium oxide in the inks. When the particle size distribution is changed, a different reflection light is caused to thereby cause a different color temperature.

The reason is that a different particle size of titanium oxide in the ink causes, after printing, dispersed light having an intensity different depending on the light wavelength, thus consequently causing the dispersed light of the printed light guide plate to have a different color temperature.

### [Regarding white ink and color temperature]

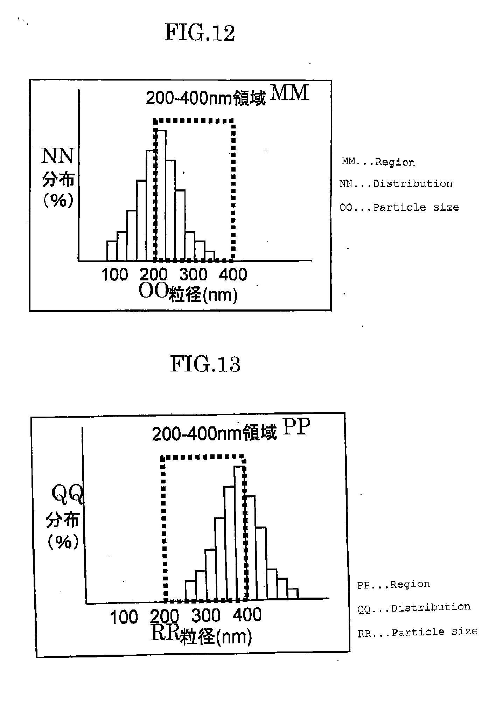

White ink includes titanium oxide as an ink pigment. Titanium oxide particles have a characteristic that light of a wavelength two times larger than the particle size is most strongly reflected. Thus, ideal white ink is the one as shown in Fig. 11 for which the particle size distribution of titanium oxide is uniform in a range from 200nm to 400nm. The resultant ink in this case has white color that uniformly reflects light having a wavelength of 400nm to 800nm (visible light) two times larger than the particle size of 200nm to 400nm. However, in an actual case, it is rare for white ink to have the uniform particle size distribution of 200nm to 400nm.
(1) Many particles having a particle size of 200nm (see Fig. 12) result in white ink strongly reflecting 400nm light (short wavelength) and bluish white ink having a high color temperature.
(2) Many particles having a particle size of 400nm (see Fig. 13) result in white ink strongly reflecting 800nm light (long wavelength) and reddish, yellowish, or greenish white ink having a low color temperature.

A color temperature is adjusted depending on a combination of these white inks having different color temperatures (or including titanium oxide having different particle size distributions) so that a light guide plate can be created that has a desired color temperature (i.e., a desired titanium oxide particle size distribution or desired light wavelength region). However, if it is difficult to adjust the color temperature only by the titanium oxide particle size, a desired light wavelength region also can be obtained by adding other particles or copper phthalocyanine for example.

In the above embodiment, the color temperature of the light guide plate is adjusted depending on a combination of a plurality of types of white inks having different titanium oxide distributions. However, the invention is not limited to this embodiment. Another configuration also may be used in which the printer includes only one type of white ink. In this configuration, titanium oxide in the ink is adjusted in advance to have a desired distribution status so that this adjusted white ink can be used to print a light guide plate.

Another configuration also may be used in which a plurality of printers are used each of which includes one type of white ink. In this configuration, titanium oxide in the inks is adjusted in advance to have a desired distribution status so that this adjusted white ink can be used to print a light guide plate. One of the different white inks included in the printers is specified and used as required so that a light guide plate having a desired color temperature can be created.

Fig. 11 to Fig. 13 illustrate the image of the particle size distribution of titanium oxide in ink. The horizontal axis shows the particle size. The vertical axis shows the distribution level. Fig. 11 shows the distribution of titanium oxide particle in ideal white ink. Fig. 12 to Fig. 13 show the distribution of titanium oxide particles in actual white ink. When assuming that the same light source is used in Fig. 2 and a light guide plate printed based on the printing conditions A shown in Fig. 2 has a color temperature of 4500K, the light guide plate printed based on the conditions B has a color temperature of 5000K, and the light guide plate printed based on the conditions C has a color temperature of 5500K. If these conditions are combined, the light guide plate printed based on the conditions D has a color temperature from 4500K to 5000K and the light guide plate printed based on the conditions E has a color temperature from 5000K to 5500K.

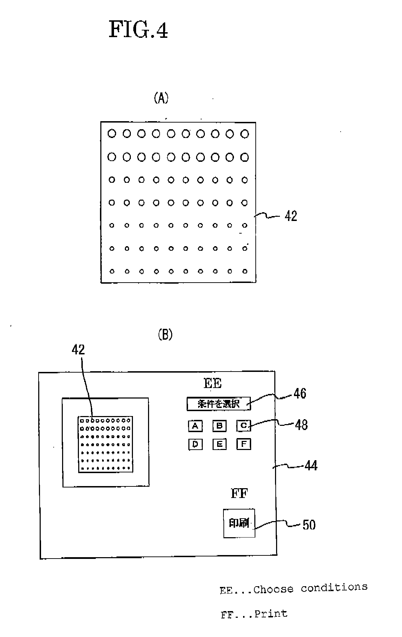

Fig. 4 illustrates the light reflection pattern of the light guide plate. In order to provide uniform reflection, the light reflection pattern is configured to have an increased area with an increase of the distance from the light source. Instead of increasing the area of the pattern, the density of the pattern having the same area also can be increased for printing or the increase of the area and the increase of the density also can be combined as required.

Another pattern also can be used such as the one having a gradation of minute printing that can be printed by an inkjet head.

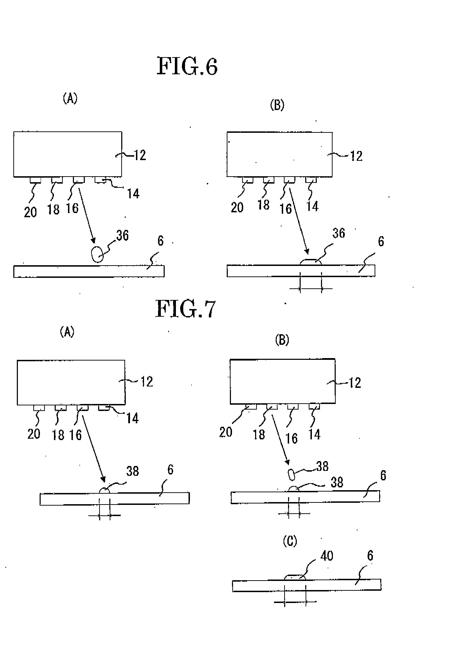

Figs. 6(A) and 6(B) and Figs. 7(A) to 7(C) illustrate the printing operation of the inkjet print head. The print head 14 communicates with the ink tank 26 storing white ink 1 described in the data table 34. The print head 16 communicates with the ink tank 28 storing white ink 2. The print head 18 communicates with the ink tank 30 storing white ink 3. The white inks 1, 2, and 3 are different in the particle size distribution of titanium oxide in the ink and thus have different ink color temperatures.

Fig. 6(A) and Fig. 6(B) illustrate the printing operation based on the conditions B shown in the data table 34 of Fig. 2. Fig. 6(A) shows a status where ink dots 36 of a normal amount of the white ink 2 are ejected through the nozzle of the print head 16 and the ink dots 36 of 100% white ink 2 corresponding to one dot are formed on the light guide plate 6. Specifically, the entire face is printed only by the white ink 2.

Figs. 7(A), 7(B), and 7(C) illustrate the printing operation based on the printing conditions E shown in the data table 34 of Fig. 2. In Figs. 7(A) to 7(C), ink dots 38 of the white ink 2 of a half amount of the normal amount are ejected through the nozzle of the print head 16 and are printed on the light guide plate 6. Next, the print head 18 ejects the ink dots 38 of the white ink 3 of a half amount of the normal amount onto the previously-printed ink dots 38 of the white ink 2. Thus, the two ink dots 38 and 38 are printed in a superposed manner in an amount corresponding to one dot. Printing 40 corresponding to one dot printed in a superposed manner is composed of the white ink 2 of 50% and the white ink 3 of 50%. Specifically, the entire face is printed by a combination of the white ink 2 and the white ink 3. This ink ejection control is performed by using a plurality of printing waveforms and driving voltages for driving the head and by selecting a required driving waveform or driving voltage.

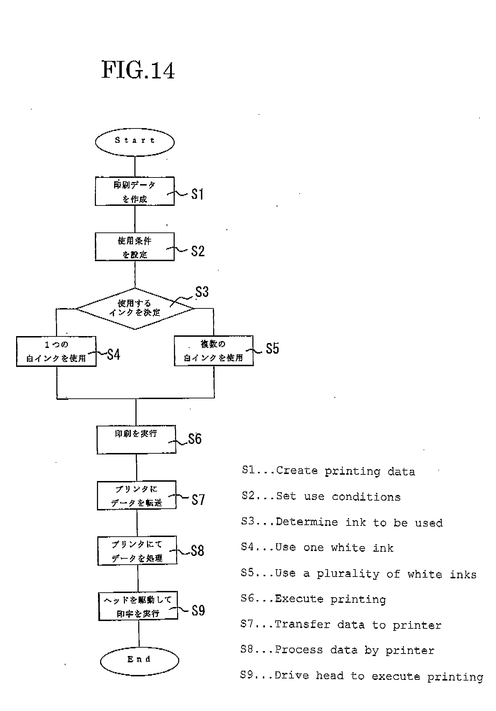

Next, with reference to the flowchart of Fig. 14, the following section will describe the steps of subjecting the printing face of the light guide plate to a reflection printing.

First, an operator in Step 1 uses software for creating a reflection pattern of a light guide plate to create reflection face printing data 42 on the computer 4. This printing data 42 is displayed on a display 44 of the computer 4. This display 44 displays a display 48 for inputting data showing conditions A, B, C, D, E, and F for using white ink. The use conditions A, B, C, D, E, and F of this display 48 correspond to the data table 34.

Next, the operator in Step 2 refers to the display 48 of the display 44 of the computer 4 to select the use conditions and use an input means such as a mouse to click a condition selection button display 46 to thereby input the use conditions (i.e., printing conditions) to the computer 4. Based on the selected conditions, the computer refers to the data table 34 to determine in Step 3 the inks 1, 2, and/or 3 to be used. The computer 4 in Step 4 selects a mode for using one white ink or selects in Step 5 a mode for using a plurality of white inks. In Step 6, when a printing button 50 is executed through the screen of the computer 4, printing data is transferred from the computer 4 to the printer 2 (Step 7). Thereafter, the data is processed by the printer 2 (Step 8). Then, the print head is driven in the main scanning direction. Then, the white ink of the selected printing conditions is printed on the light guide plate 6 (Step 9).

In the embodiment, a technique has been described to print white inks of different color temperatures at the same position by a 50%/50% ratio. However, the invention is not limited to this. A 100%+50% printing also may be performed. Alternatively, one additional white ink having the same color temperature may be prepared (white 1, white 1, white 2, and white 3) and may be printed as required on the same position by performing a 100%+100% (=200%) printing, thus achieving a further change of the color temperature. If a plurality of white inks having the same color temperature are not prepared, another printing control also may be performed to perform printing on the same position twice. An inkjet printer has a characteristic that different ink can be printed on each position. Thus, even when a plurality of light sources having a different luminance are used, the difference also can be easily corrected by performing printing with a color temperature different depending on each position.

The data table 34 also may be provided in a memory included in the controller of the printer 2. In this case, the printing conditions are firstly set in the printer 2 in advance so that only printing data can be transferred from the computer 4.

Fig. 13 illustrates a configuration in which the data table 34 is provided in a memory included in the controller of the printer 2.

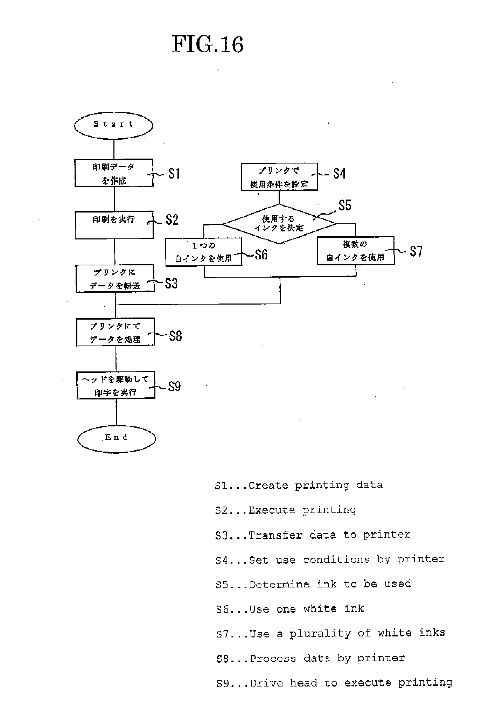

The following section will describe the operation in this case with reference to the flowchart shown in Fig. 16.

First, the operator in Step 1 uses the software for creating a reflection pattern of a light guide plate to create the reflection face printing data 42 on the computer 4. This printing data 42 is displayed on the display 44 of the computer 4. On the other hand, the display of the controller of the printer 2 displays a display for inputting data showing the conditions A, B, C, D, E, and F for using white ink. The conditions A, B, C, D, E, and F on the display correspond to the data table 34.

The operator in Step 4 refers to the display of the display of the controller to select the use conditions and uses an input means such as a keyboard to set the use conditions (i.e., printing conditions) in the controller of the printer 2. Based on the selected conditions, the controller refers to the data table 34 to determine in Step 5 the ink(s) 1, 2, and/or 3 to be used. The controller selects in Step 6 a mode for using one white ink or selects in Step 7 a mode for using a plurality of white inks.

On the other hand, when the operator in Step 2 executes the printing button through the screen of the computer 4, the printing data is transferred from the computer 4 to the printer 2 (Step 3). Thereafter, the data is processed by the printer 2 (Step 8). Then, the print head is driven and the white ink of the selected printing conditions is printed on the light guide plate 6 (Step 9).

In the above embodiment, a structure has been described in which a serial printer is used in which parallely-arranged print heads are moved in the main scanning direction. However, print heads also may be arranged in a longitudinal direction of the nozzle array. Alternatively, another structure also may be used in which a line head longer than the width of a light guide plate is used and is arranged in a direction orthogonal to the carrying direction of the light guide plate. A printer of another configuration also may be used in which a light guide plate is fixed on a platen and a print head is moved.

### Description of Reference Numerals

- 2: Inkjet printer
- 4: Computer
- 6: Light guide plate
- 8: Carrying auxiliary member
- 10: Platen
- 12: Carriage
- 14: Print head
- 16: Print head
- 18: Print head
- 20: Print head
- 22: Nozzle
- 24: Body
- 26: Ink tank
- 28: Ink tank
- 30: Ink tank
- 32: Ink tank
- 34: Data table
- 36: Ink dot
- 38: Ink dot
- 40: Ink dot
- 42: Printing data
- 44: Display
- 46: Carrying table
- 48: Carrying table
- 50: Printing section
- 52: Lateral rail
- 54: Light source
- 56: White ink supply section
- 58: Media driving mechanism

## Claims

1. A method for creating a light guide plate by transferring printing data of a light reflection pattern stored in a computer to an inkjet printer so that the inkjet printer subjects a printing face of the light guide plate to a reflection printing for randomly dispersing the light emitted from a light source to the interior of the light guide plate, comprising:
providing, in the inkjet printer, a white ink supply section including ink tanks for storing a plurality of types of white inks determining the color temperature of the light guide plate, respectively;
providing, in the inkjet printer, a plurality of print heads, the respective print heads being connected to the respective ink tanks so that the respective print heads can eject white inks of types different from one another, and
subjecting, by the inkjet printer, the light guide plate to a reflection printing to create a light guide plate having a color temperature corresponding to one selected type of white ink or a combination of a plurality of selected types of white inks.

2. The method for creating a light guide plate according to claim 1, wherein a data table is provided that sets various printing conditions determining the color temperature of the light guide plate based on the selection and combination of a plurality of types of white inks and, based on the data table, the inkjet printer subjects, based on selected printing conditions, the light guide plate to the reflection printing to create a light guide plate having a color temperature corresponding to printing conditions selected based on one type of white ink or a combination of a plurality of types of white inks.

3. The method for creating a light guide plate according to claim 1 or 2, wherein the respective plurality of types of white inks determining the color temperature of the light guide plate include titanium oxide having a different particle size distribution.

4. A device for creating a light guide plate composed of an inkjet printer and a computer for transferring to the printer the printing data of a light reflection pattern, wherein the printing data of the light reflection pattern stored in the computer is transferred to the inkjet printer, the inkjet printer subjects a printing face of the light guide plate to a reflection printing for randomly dispersing the light emitted from a light source to the interior of the light guide plate, wherein the inkjet printer includes a white ink supply section including ink tanks for storing a plurality of types of white inks determining the color temperature of the light guide plate, respectively, the inkjet printer includes a plurality of print heads, the respective print heads are connected to the respective ink tanks so that the respective print heads can eject white inks of types different from one another, the inkjet printer subjects the light guide plate to a reflection printing to create a light guide plate having a color temperature corresponding to one selected type of white ink or a combination of a plurality of selected types of white inks.

5. The device for creating a light guide plate according to claim 4, wherein a data table is provided that sets various printing conditions determining the color temperature of the light guide plate based on the selection and combination of a plurality of types of white inks and, based on the data table, the inkjet printer subjects, based on selected printing conditions, the light guide plate to the reflection printing to create a light guide plate having a color temperature corresponding to printing conditions selected based on one type of white ink or a combination of a plurality of types of white inks.

6. The device for creating a light guide plate according to claim 5, wherein the data table is provided in the computer.

7. The device for creating a light guide plate according to claim 5, wherein the data table is provided in the storage apparatus of the controller of the inkjet printer.

8. The device for creating a light guide plate according to claim 4 or 5, wherein the respective plurality of types of white inks determining the color temperature of the light guide plate include titanium oxide having a different particle size distribution.

9. The device for creating a light guide plate according to claim 5, wherein the printing conditions of the data table is composed of selection information for selecting one of a plurality of types of white inks and ink combination information consisting of a combination of two or more different types of white inks and data for the allocation of combined inks.

10. The device for creating a light guide plate according to claim 4, wherein a carriage movable in a main scanning direction of the inkjet printer has thereon a plurality of print heads arranged in parallel so that printing regions are superposed one another in a main scanning direction.

11. A method for creating a light guide plate, wherein the printing data of the light reflection pattern stored in the computer is transferred to the inkjet printer, the inkjet printer subjects a printing face of the light guide plate to a reflection printing for randomly dispersing the light emitted from a light source to the interior of the light guide plate, thereby creating the light guide plate, the inkjet printer includes a white ink supply section including ink tanks for storing white inks, the print head of the inkjet printer is connected to the ink tanks so that white ink can be ejected from the print head, the white ink includes titanium oxide having a particle size distribution, the particle size distribution status is adjusted depending on the color temperature of a desired light guide plate, ink for which the distribution status of the titanium oxide particle size is adjusted is used to allow the inkjet printer to subject the light guide plate to the reflection printing to thereby create a light guide plate having a color temperature corresponding to the white ink.
